# EUROPEAN PATENT APPLICATION

(11) **EP 0 578 588 A1**
(43) Date of publication of application: **12.01.1994**
(21) Application number: 93420283.9
(22) Date of filing: 29.06.1993
(51) Int. Cl.: G03B 17/08

(54) **Method for opening the watertight casing of a camera and a device for implementing the method**

(30) Priority: 06.07.1992 FR 9208561
(71) Applicant: KODAK-PATHE, F-75594 Paris Cedex 12 (FR); EASTMAN KODAK COMPANY, Rochester, New York 14650-2201 (US)
(72) Inventor: Creton, Alain Stéphane, F-93410 Vaujours (FR)
(74) Representative: Buff, Michel

(57) **Abstract**

The invention concerns a method for opening the watertight casing of a camera and a device for implementing the method according to the invention.

The device comprises principally a chamber 71; an air inlet inside the chamber, having a connecting piece 75 designed to interact sealingly with an orifice provided in the watertight casing; means (72, 76, 77) for immobilising the camera inside the chamber; a source of compressed air connected to the air inlet 75; and means 74 for actuating the source of compressed air in order to supply the air inlet with compressed air.

Application to disposable watertight cameras.

## Description

The invention concerns a method for opening the watertight casing of a camera and a device for implementing the method according to the invention.

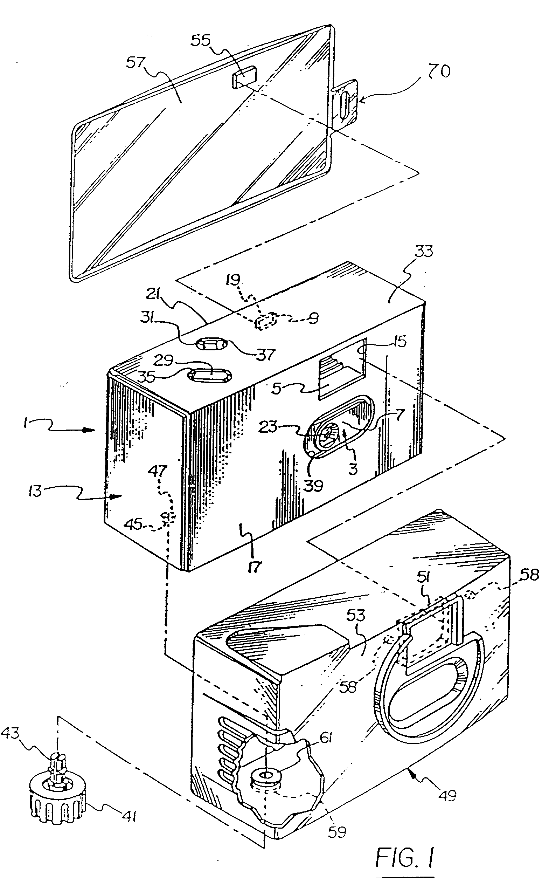

Fig 1, to which reference is now made, illustrates diagrammatically a camera of the watertight casing type for which the method and device according to the present invention can be used.

The camera shown comprises mainly an inner plastic body 3, into which a photographic film is loaded, comprising front and rear viewing openings 5, 9 for viewing an object to be photographed, the said inner plastic body being enclosed inside an outer cardboard case 13 in which front and rear openings 15 and 19 are provided, aligned respectively with the front and rear viewing openings 5, 9 of the inner plastic body. The camera also comprises a box or outer casing, produced from transparent plastic 49 and enclosing the inner body 3 and the outer cardboard case 13 in a watertight manner. This watertight casing 49 comprises front and rear viewing lenses 51, 55 forming an integral part of the watertight casing 49 and disposed so as to be aligned optically with the front and rear openings in the outer cardboard case and with the front and rear openings in the inner plastic body. A sprocket 41 which can be rotated manually is coupled to the film advance mechanism through a shank 43 passing through respective openings 45, 47 and 59 provided in the bottom of the outer cardboard case 13, inner plastic body 3 and watertight casing 49, suitable sealing means 61, such as a joint, being provided to maintain the watertightness of the watertight casing 49, in order to prevent water from entering the casing 49 along the shank 43 of the drive sprocket 41.

The watertight casing 49 is, as regards overall design, produced in two pieces 49, 57 produced by moulding and welded in a watertight manner so as to enclose the camera.

In addition, on each side of the watertight casing, lugs 70 are provided (only one of these lugs is shown), one of them making it possible, for example, to fix to the camera a bracket facilitating the carrying of the camera by the user.

Such a camera is described in more detail in US patent 4 882 600.

Such a camera, of the disposable type, is sold by the manufacturer with the film already loaded inside. When all the shots are taken, the film is rewound and sent to the manufacturer to be developed there. The latter removes the camera from the watertight casing, extracts the film from the inner body and develops the film. The open cases are then thrown away or recycled.

One of the problems encountered with this type of camera arises when the watertight casing is opened, the strength and degree of watertightness of the latter being designed to resist high pressures and careless handling on the part of the users. Such a strength therefore makes it difficult to open such a box.

Up until now these boxes have been opened manually in the processing laboratories by operators using tools as rudimentary and unsafe as screwdrivers and hammers, causing a number of accidents related to the handling of these tools or plastics material thrown off when the watertight casing is opened.

In addition, such methods require a significant amount of time for the opening of such a camera, which is prejudicial to the profitability of the photographic processing laboratories.

One object of the present invention is therefore to provide a method for opening the watertight casing of a camera as described above and not having the drawbacks of the techniques mentioned above.

Another object of the present invention is to provide a device for implementing the method of the present invention.

Other objects of the present invention will be clear in more detail in the following description.

According to the present invention, these objects are achieved by producing a device comprising:
a) a chamber, the dimensions of which are suitable for receiving such a camera, the said chamber having a lid enabling the said camera to be placed in the chamber and removed from it;
b) an air inlet provided inside the chamber and having a connecting piece designed to interact sealingly with an orifice provided in the said watertight casing;
c) means for immobilising the camera with respect to the said connecting piece inside the chamber;
d) a source of compressed air connected to the said air inlet;
e) means for activating the said source in order to supply the air inlet with compressed air when the lid is in the closed position.

According to the present invention, a method is also implemented comprising the following steps:
a) inserting the camera into a chamber, the dimensions of which are suitable for receiving such a camera, the said chamber having a lid enabling the said camera to be placed in the chamber and removed from it, the said camera being inserted so as to cause an orifice provided in its body to interact sealingly with the connecting piece of an air inlet connected to a source of compressed air and provided inside the chamber, means being provided for immobilising the camera with respect to the said connecting piece inside the chamber;
b) closing the lid of the chamber;
c) supplying the air inlet with compressed air.

In the following description, reference will be made to the drawing in which:
- Fig 1 shows an exploded view of an example of a camera for which the method and device according to the present invention are particularly suited;
- Fig 2 shows diagrammatically a preferred embodiment of the device for implementing the method according to the present invention.

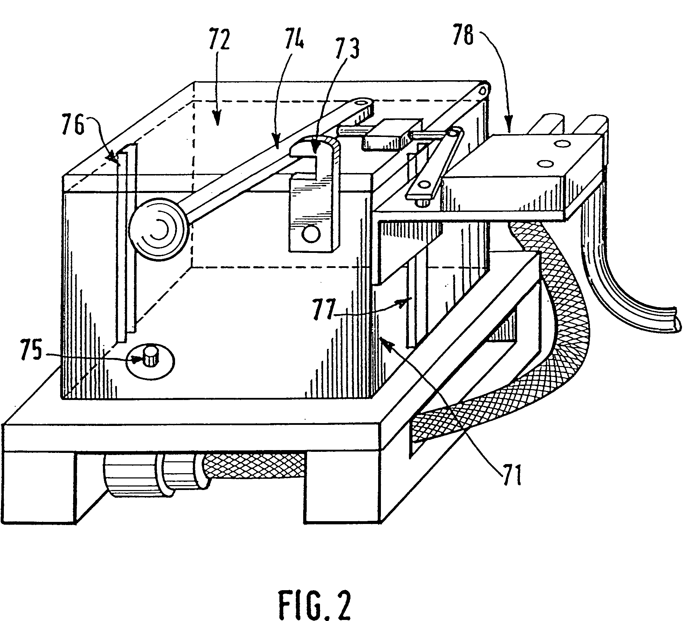

As shown in Fig 2, the device enabling the method according to the present invention to be implemented comprises principally a chamber 71, the dimensions of which are suitable for receiving a camera of the type described with reference to Fig 1. According to one advantageous embodiment, the said chamber is produced from aluminium, but it is obvious that other suitable materials such as plastic could be used. This chamber comprises a lid 72 designed to allow the camera to be placed in the chamber and removed from it.

According to the embodiment shown, the said chamber has a latch 73 suitable for interacting with locking means 74 provided on the lid 72 in order to keep the chamber in the closed position during the operation of opening a camera. According to another embodiment, the lid is produced from a material which gives it sufficient weight not to require such locking means.

Advantageously, means (not shown) are provided for fixing the said apparatus to the floor or to a work table.

This device also comprises an air inlet provided inside the chamber and having a connecting piece 75 designed to interact sealingly with an orifice provided in the watertight casing of the camera. Advantageously this is an orifice (59, Fig 1) designed to receive the sprocket for winding the film inside the camera, the said sprocket being withdrawn prior to the insertion of the camera in the said chamber, the sealing means (61, Fig 1) ensuring the watertightness of the body at the sprocket being kept on the body in order to ensure the airtightness of the contact between the watertight body and the connecting piece 75 for the air inlet.

A source of compressed air (not shown) is connected to the said air inlet 75 in order to supply the said air inlet selectively with compressed air, suitable supply/cutoff means 78 being provided between the said source and the air inlet. The pressure of air used, advantageously, varies between 3. 10⁵ Pa and 7. 10⁵ Pa.

According to a preferred embodiment, the movement of the locking means 74 to lock the lid in the closed position causes the air inlet 75 to be supplied with compressed air, the movement of the locking means in the opposite direction in order to unlock the lid then interrupting the supply of compressed air to the inlet 75.

The chamber also comprises means for immobilising the camera with respect to the connecting piece 75 in the chamber, at least when the air inlet is being supplied with compressed air. In the embodiment shown, these means comprise two channels 76, 77 provided in two opposite sides inside the chamber 71 and designed to interact with lugs provided on the two lateral sides of the camera and which were discussed in more detail with reference to Figure 1. In the direction opposite to the direction of the compressed air intake, the camera is locked with respect to translational movement by the lid 72, the latter bearing on the face of the camera opposite to the face in which the winding sprocket orifice is provided, thus assisting airtight contact between the air inlet connecting piece and the watertight casing of the camera. It is obvious that other arrangements of the immobilisation means can be envisaged.

Advantageously, in the embodiment described, the lugs and channels act as locating means in order to prevent the insertion of the camera in an unsuitable position in which the air inlet does not interact with the orifice 59 on the camera.

Thus, to implement the method of the invention, the camera is inserted in the chamber 71 by sliding the lugs on the camera into the channels 76, 77 in the chamber so as to cause the air inlet connecting piece 75 to coincide with the orifice provided in the casing of the said camera; the lid is closed and then, in the case of the embodiment shown in Fig 2, the locking means 74 are actuated so as to lock the lid in the closed position, the movement of the locking means in this direction actuating the supply of compressed air to the air inlet 75; the watertight casing opens in a fraction of a second at the sealing lines of the two pieces forming the watertight casing in the case of a camera of the type described with reference to Fig 1.

The supply of compressed air is then interrupted by moving the locking means 74 in the other direction; the lid of the chamber is opened and the camera is extracted, the watertight housing being removed from the latter. To recover the film, it remains only to remove the cardboard case and open the inner plastic body, which presents no particular difficulty.

In the preceding description, reference is made to preferred embodiments of the method and device according to the present invention. It is obvious that other variants can be envisaged without going beyond the spirit of the invention. For example, these variants may relate to the means of immobilising the camera or means for controlling the compressed air supply.

## Claims

1. Device for opening the watertight casing of a camera including such a casing, comprising:
a) a chamber (71), the dimensions of which are suitable for receiving such a camera, the said chamber having a lid (72) enabling the said camera to be placed in the chamber and removed from it;
b) an air inlet provided inside the chamber and having a connecting piece (75) designed to interact sealingly with an orifice (59) provided in the said watertight casing (49);
c) means (72, 76, 77, 70) for immobilising the camera with respect to the said connecting piece (75) inside the chamber (71);
d) a source of compressed air connected to the said air inlet; and
e) means (74, 78) for activating the said source in order to supply the air inlet with compressed air when the lid (72) is in the closed position.

2. Device according to Claim 1, characterised in that the said chamber also comprises locking means for keeping the lid (72) in the closed position, the movement of the said locking means for locking the said lid in the closed position actuating the said source of compressed air.

3. Device according to Claim 1 or 2, characterised in that the pressure of compressed air varies between 3. 10⁵ Pa and 7. 10⁵ Pa.

4. Device according to any one of Claims 1 to 3, characterised in that the said chamber (71) is produced from aluminium.

5. Device according to any one of Claims 1 to 3, characterised in that the said chamber (71) is produced from plastic.

6. Device according to any one of Claims 1 to 5, characterised in that the said means for immobilising the camera comprise channels (76, 77) provided in two opposite walls of the chamber and suitable for interacting with lugs (70) provided on the lateral walls of the camera, the lid (72), in the closed position, being in contact with the face of the camera opposite to the one in which the said orifice (59) is provided.

7. Device according to any one of Claims 1 to 6, characterised in that the said orifice is the one (59) through which the sprocket (41) for winding the camera film engages sealingly, the said sprocket having been withdrawn prior to the insertion of the camera in the said chamber (71), the means (61) ensuring watertightness at the said winding sprocket (41) also ensuring the airtightness of the contact with the connecting piece (75) for the said air inlet.

8. Method for opening the watertight casing of a camera including such a casing, comprising the following steps:
a) inserting the camera into a chamber (71), the dimensions of which are suitable for receiving such a camera, the said chamber having a lid (72) enabling the said camera to be placed in the chamber and removed from it, the said camera being inserted so as to cause an orifice (59) provided in its body (49) to interact sealingly with the connecting piece (75) of an air inlet connected to a source of compressed air and provided inside the chamber (71), means (72, 76, 77) being provided for immobilising the camera with respect to the said connecting piece (75) inside the chamber;
b) closing the lid (72) of the chamber;
c) supplying the air inlet with compressed air.

9. Method according to Claim 8, characterised in that it also comprises a step in which the lid is locked in the closed position, the locking of the said lid in the closed position controlling the compressed air supply to the air inlet.

10. Method according to Claim 8 or 9, characterised in that the compressed air pressure varies between 3. 10⁵ and 7. 10⁵ Pa.

11. Method according to any one of Claims 8 to 10, characterised in that, before inserting the camera in the said chamber, the sprocket (41) for winding the photographic film provided on the camera is removed without removing the means (59) ensuring the watertightness of the casing at the said winding sprocket, the orifice thus formed being designed to interact sealingly with the air inlet connecting piece (75).
